(19) Europäisches Patentamt / European Patent Office / Office européen des brevets

(11) EP 1 997 070 B1

(12) EUROPÄISCHE PATENTSCHRIFT

(45) Veröffentlichungstag und Bekanntmachung des Hinweises auf die Patenterteilung:
**03.01.2018 Patentblatt 2018/01**

(21) Anmeldenummer: **07703458.5**

(22) Anmeldetag: **14.02.2007**

(51) Int Cl.:
***G06T 7/593*** *(2017.01)* ***G06T 7/00*** *(2017.01)*

(86) Internationale Anmeldenummer:
**PCT/EP2007/001271**

(87) Internationale Veröffentlichungsnummer:
**WO 2007/107214 (27.09.2007 Gazette 2007/39)**

(54) **RAUM-ZEITLICHES VERFAHREN UND VORRICHTUNG ZUR KORRESPONDENZBESTIMMUNG, VORZUGSWEISE ZUR DREIDIMENSIONALEN REKONSTRUKTION EINER SZENE**

METHOD AND DEVICE FOR DETERMINING CORRESPONDENCE, PREFERABLY FOR THE THREE-DIMENSIONAL RECONSTRUCTION OF A SCENE

PROCÉDÉ ET DISPOSITIF DE DÉTERMINATION DE CORRESPONDANCES, DE PRÉFÉRENCE POUR LA RECONSTRUCTION TRIDIMENSIONNELLE D'UNE SCÈNE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.03.2006 DE 102006013598**

(43) Veröffentlichungstag der Anmeldung:
**03.12.2008 Patentblatt 2008/49**

(73) Patentinhaber: **Pilz GmbH & Co. KG**
**73760 Ostfildern (DE)**

(72) Erfinder:
- **GOEVERT, Tobias**
  **39609 Bielefeld (DE)**
- **KRUEGER, Lars**
  **89077 Ulm (DE)**
- **WOEHLER, Christian**
  **72535 Heroldstatt (DE)**

(74) Vertreter: **Witte, Weller & Partner Patentanwälte mbB**
**Postfach 10 54 62**
**70047 Stuttgart (DE)**

(56) Entgegenhaltungen:
- **LI ZHANG ET AL: "Spacetime stereo: shape recovery for dynamic scenes" PROCEEDINGS 2003 IEEE COMPUTER SOCIETY CONFERENCE ON COMPUTER VISION AND PATTERN RECOGNITION IEEE COMPUT. SOC LOS ALAMITOS, CA, USA, Bd. 2, 2003, Seiten II-367, XP002486126 ISBN: 0-7695-1900-8**
- **DAVIS J ET AL: "Spacetime Stereo: A Unifying Framework for Depth from Triangulation" IEEE TRANSACTIONS ON PATTERN ANALYSIS AND MACHINEINTELLIGENCE, IEEE SERVICE CENTER, LOS ALAMITOS, CA, US, Bd. 27, Nr. 2, 1. Februar 2005 (2005-02-01), Seiten 296-302, XP011124285 ISSN: 0162-8828**
- **LAPTEV I ET AL: "Periodic Motion Detection and Segmentation via Approximate Sequence Alignment" COMPUTER VISION, 2005. ICCV 2005. TENTH IEEE INTERNATIONAL CONFERENCE ON BEIJING, CHINA 17-20 OCT. 2005, PISCATAWAY, NJ, USA,IEEE, Bd. 1, 17. Oktober 2005 (2005-10-17), Seiten 816-823, XP010854869 ISBN: 978-0-7695-2334-7**
- **DHONG U R ET AL: "STRUCTURE FROM STEREO - A REVIEW" IEEE TRANSACTIONS ON SYSTEMS, MAN AND CYBERNETICS, IEEE INC. NEW YORK, US, Bd. 19, Nr. 6, 1. November 1989 (1989-11-01), Seiten 1489-1510, XP000127015 ISSN: 0018-9472**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- NALWA V S ET AL: "ON DETECTING EDGES" IEEE TRANSACTIONS ON PATTERN ANALYSIS AND MACHINEINTELLIGENCE, IEEE SERVICE CENTER, LOS ALAMITOS, CA, US, Bd. PAMI-08, Nr. 6, 1. Januar 1986 (1986-01-01), Seiten 699-714, XP001194702 ISSN: 0162-8828
- TRIENDL E ET AL: "STEREO VISION AND NAVIGATION WITHIN BUILDINGS" PROCEEDINGS OF THE INTERNATIONAL CONFERENCE ON ROBOTICS AND AUTOMATION. RALEIGH, MAR. 30 - APR. 3, 1987; [PROCEEDINGS OF THE INTERNATIONAL CONFERENCE ON ROBOTICS AND AUTOMATION], WASHINGTON, IEEE COMP. SOC. PRESS, US, Bd. 3, 31. März 1987 (1987-03-31), Seiten 1725-1730, XP001159602
- TRIENDL E E ED - INSTITUTE OF ELECTRICAL AND ELECTRONICS ENGINEERS: "HOW TO GET THE EDGE INTO THE MAP" PROCEEDINGS OF THE INTERNATIONAL JOINT CONFERENCE ON PATTERN RECOGNITION. KYOTO, 7-10 NOVEMBER 1978; [PROCEEDINGS OF THE INTERNATIONAL JOINT CONFERENCE ON PATTERN RECOGNITION], NEW YORK, I.E.E.E, US, Bd. PROC. 4, 1. Januar 1978 (1978-01-01), Seiten 946-950, XP000907086
- YAMANA F ET AL: "Edge plane detection in spatio-temporal images by using edge vector and edge reliability" PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA,IEEE COMPUT. SOC, US, Bd. 3, 3. September 2000 (2000-09-03), Seiten 660-663, XP010533374 ISBN: 978-0-7695-0750-7
- LAPTEV I ET AL: "Space-time interest points" PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, Bd. CONF. 9, 13. Oktober 2003 (2003-10-13), Seiten 432-439, XP010662321 ISBN: 978-0-7695-1950-0

**Beschreibung**

Die Erfindung betrifft ein Verfahren zur Bestimmung von räumlichen Korrespondenzen zwischen Bildbereichen in mehreren, aus unterschiedlichen Beobachtungsperspektiven aufgenommenen Bildersequenzen einer Szene, vorzugsweise zur dreidimensionalen Rekonstruktion dieser Szene, sowie eine Vorrichtung zur dreidimensionalen Szenenrekonstruktion.

Passive Methoden zur dreidimensionalen Szenenrekonstruktion anhand von Bilddaten beruhen im allgemeinen auf der Bestimmung von räumlichen Korrespondenzen zwischen mehreren aus verschiedenen Richtungen und Entfernungen aufgenommenen Bildern der Szene. Diese Korrespondenzbestimmung entspricht einer Identifikation von Pixelpositionen oder -bereichen in den Bildern mit Punkten bzw. Objekten oder Objektabschnitten in der zu rekonstruierenden Szene. Nach der Bestimmung der Korrespondenzen wird üblicherweise über bekannte Verfahren die dreidimensionale Struktur der Szene in Form einer Punktewolke bestimmt, wobei jeder Punkt bzw. jede Punktansammlung der Punktewolke den zugeordneten, zueinander korrespondierenden Pixelpositionen bzw. -bereichen entspricht.

Der Vorgang der Bestimmung dieser räumlichen Korrespondenzen wird in der Literatur zutreffend als Korrespondenzproblem bezeichnet und es sind eine Vielzahl von Möglichkeiten zur Lösung dieses Problems vorgeschlagen worden:

> Eine übliche Methode zur Bestimmung der räumlichen Korrespondenzen ist die Korrelation der Bildinhalte auf lokaler Ebene, wobei Inhalte räumlicher Fenster unter Anwendung geeigneter Fehlermaße als Ähnlichkeitsmaß, wie z.B. Kreuzkorrelationskoeffizienten, Summe der Differenzquadrate, Summe der absoluten Differenzen, miteinander verglichen werden. Diese Methode ist insbesondere für kalibrierte Stereo-Bildpaare, also Bildpaare, bei denen nur Bildpunkte, die auf gemeinsamen Epipolarlinien liegen, in Korrespondenz stehen können, zeitlich sehr effektiv.

In dem Fachartikel von J. Davis, D. Nehab, R. Ramamoorthi, S. Rusinkiewicz, Space-time Stereo: A unifying framework for Depth from Triangulation in IEEE Trans. Pattern Analysis and Machine Intelligence, Vol. 27, No. 2, 2005 wird vorgeschlagen, nicht nur die Inhalte von räumlichen Fenstern zur Korrelationsanalyse zu verwenden, sondern das Korrelationsfenster in die zeitliche Dimension zu erweitern. Als Ähnlichkeitsmaß zur Korrespondenzbildung wird die Summe der quadratischen Differenzen der raum-zeitlichen Korrelationsfenster herangezogen.

Ein weiterer Ansatz zur Lösung des Korrespondenzproblems wird in dem Fachartikel von C. Wöhler, L. Krüger, A Contour based Stereo Vision Algorithm für Video Surveillance Applications in SPIE Visual Communication and Image Processing, Lugano, 2003 beschrieben. Bei diesem Ansatz werden in einem ersten Schritt relevante Bildregionen in den Bildern ermittelt. Aus den relevanten Bildregionen werden zweidimensionale Objekte in den Bildern abgeleitet und zugehörige Objektkonturlinien erstellt. Die Korrespondenzen werden dann ermittelt, indem die Kontureigenschaften der Objektkonturlinien an den Durchgangspunkten durch die Epipolarlinien verglichen werden.

In dem Fachartikel von Li Zhang et al.: "Spacetime Stereo: shape recovery for dynamic scenes" in Proceedings 2003 IEEE Computer Society Conference on Computer Vision and Pattern Recognition IEEE Comput. Soc Los Alamitos, CA, USA, Bd. 2, 2003, Seiten II-367, wird ein Spacetime-Stereoverfahren vorgeschlagen, welches Bilder einer Bildfolge als 2+1 dimensionale Datenmengen in der Raumzeit auffasst. Hierbei wird ein regionen-basiertes Korrespondenzverfahren beschrieben, das zwei Videoströme miteinander abgleicht, anstatt Paarungen von Bildern einzelbilderweise abzugleichen.

In dem Fachartikel von J. Davis et al "Spacetime Stereo: A Unifying Framework for Depth from Triangulation", IEEE TRANSACTIONS ON PATTERN ANALYSIS AND MACHINE INTELLIGENCE, VOL. 27, NO. 2, FEBRUARY 2005, wird ebenfalls ein Space-time-Stereo-Korrespondenzverfahren vorgeschlagen, welches ebenfalls regionen-basiert ist; die Möglichkeit einer merkmals-basierten Verfahrensweise basierend auf Eckpunkte wird nur ganz allgemein erwähnt. In dem Fachartikel von Laptev et al.: "Periodic Motion Detection and Segmentation via Approximate Sequence Alignment" in Computer Vision, 2005. ICCV 2005. Tenth IEEE International Conference on Beijing, China 17-20 Oktober 2005, Piscataway, NJ, USA; IEEE, Bd. 1, 17. Oktober 2005 (2005-10-17), Seiten 816-823, wird vorgeschlagen, periodische Bewegungen in komplexen Schemen durch Auswertung zweier Videosequenzen zu detektieren. Hierbei wird ein merkmalbasiertes Korrespondenzverfahren eingesetzt, wodurch bewegende Objekte innerhalb der Videos erkannt und isoliert werden können.

In dem Fachartikel von Dhong et al.: "Structure from Stereo - a Review" in IEEE Transactions on Systems, Man and Cybernetics, IEEE Inc. New York, US, Bd. 19, Nr. 6, 1. November 1989, Seiten 1489-1510, wird ein Verfahren zur KorrespondenzbeStimmung zwischen zwei Bildern vorgeschlagen, welches auf Kantenerkennung basiert.

In dem Fachartikel von Triendl et al.: "Stereo Vision and Navigation within Buildings" in Proceedings of the International Conference on Robotics and Automation. Raleigh, 30. März - 3. April 1987, Washington, IEEE Comp. Soc. Press, US, Bd. 3, Seiten 1725-1730, 31. März 1987, wird ein Verfahren vorgeschlagen, das auf Kantendetektion basiert, um eine Stereoansicht für autonome Roboter bereitzustellen,.

In dem Fachartikel von Laptev et al.: "Space-time interest points", Proceedings of the Eight IEEE International Conference on Computer Vision. (ICCV). Nice, France, 13.-16. Oktober 2003; Los Alamitos, CA: IEEE Comp. Soc, US, Bd. Conf. 9, 13. Oktober 2003, Seiten 432-439, wird ein Verfahren vorgeschlagen, um sogenannte "interest points" in bewegten Bildern mit hoher Variation und nicht konstanten Bewegungen zu erfassen. Eine Korrespondenzbestimmung wird hierbei nicht berührt.

Das der Erfindung zugrunde liegende Problem ist es, ein Verfahren zu schaffen, welches bei geringem Rechenaufwand eine hohe Zuverlässigkeit bei der Lösung des Korrespondenzproblems erbringt sowie eine entsprechende Vorrichtung zu bilden.

Die Lösung des Problems erfolgt mit einem Verfahren gemäß Anspruch 1 sowie einer Vorrichtung gemäß Anspruch 16 Vorteilhafte Ausführungsformen sind durch die Unteransprüche gegeben.

Erfindungsgemäß wird ein Verfahren zur Bestimmung von räumlichen Korrespondenzen zwischen Bildbereichen in mehreren Bildersequenzen einer Szene vorgeschlagen.

Die räumlichen Korrespondenzen sind Zuordnungen von Bildbereichen aus den mehreren Bildersequenzen, wobei ein Bildbereich aus einer ersten Bildersequenz zu einem Bildbereich aus einer zweiten Bildersequenz und gegebenenfalls zu weiteren Bildbereichen aus weiteren Bildersequenzen zugeordnet wird. Der Begriff Bildbereich umfasst dabei ausgedehnte Bereiche in den Bildersequenzen, also eine Vielzahl von Pixeln, und/oder einen einzigen Bildpunkt, also einen einzigen Pixel.

Zur Umsetzung des Verfahrens werden Bildersequenzen aufgenommen, wobei eine Bildersequenz aus einer Abfolge von Einzelbildern der Szene besteht, die aus einer einzigen Beobachtungsperspektive erfasst sind und vorzugsweise einen äquidistanten zeitlichen Abstand aufweisen. Die Bildersequenzen werden aus unterschiedlichen Beobachtungsperspektiven aufgenommen, vorzugsweise aus verschiedenen Beobachtungsrichtungen und/oder Beobachtungsentfernungen und/oder mit verschiedenen optischen Abbildungseinrichtungen. Vorzugsweise sind die Bilder der mehreren Bildersequenzen jeweils zum gleichen Zeitpunkt aufgenommen.

In den Bildersequenzen werden relevante Bildregionen ermittelt, also Bildregionen, die für eine Korrespondenzbestimmung geeignet sind. Aus diesen Bildregionen werden ein oder mehrere Bildbereich(e) gebildet, wobei der/die Bildbereich(e) identisch zu den Bildregionen und/oder als Teilbereiche der Bildregionen und/oder als mit den Bildregionen überlappende Bereiche ausgebildet sein können.

An die Bildbereiche werden in einem durch Pixelposition u, v, Bildwert g und Zeit t aufgespannten Raum jeweils eine parametrierte Funktion h(u,v,t) angepasst, also eine Funktion, die als Variable die Pixelposition u, v und die Zeit t aufweist und die eine beliebige Anzahl von Parametern aufweist. Die Bezeichnungen Raum R(uvgt) und Funktion h(u,v,t) stehen dabei stellvertretend für alle mathematischen Darstellungen, die den gleichen technischen Inhalt widerspiegeln. Insbesondere werden durch diese Bezeichnungen mathematisch äquivalente Darstellungen umfasst. Beispielsweise ist bei der Verarbeitung von Farbbildaufnahmen der Bildwert g anzupassen, sodass der Raum R im Falle eines RGB-Farbmodells als Raum R(uvrgbt) bezeichnet wird.

Zur Bildung eines Ähnlichkeitsmaßes zwischen Bildbereichen der mehreren Bildersequenzen werden erfindungsgemäß die Parameter der parametrierten Funktionen verwendet. Als Parameter sind insbesondere die in der gewählten mathematischen Darstellung der Funktion h(u,v,t) verwendeten Funktionsparameter und/oder davon abgeleitete Parameter zu verstehen. Vorzugsweise werden die Parameter eines Bildbereichs in einer ersten Bildersequenz mit den Parametern eines Bildbereichs in einer zweiten Bildersequenz und gegebenenfalls mit Parametern eines Bildbereichs in weiteren Bildersequenzen in Bezug gesetzt, insbesondere miteinander verglichen.

Die Erfindung geht dabei von der Überlegung aus, dass Ansätze zur Korrespondenzbildung, die auf der Betrachtung der Ähnlichkeit kleiner Bildregionen beruhen, dazu neigen, eine Vielzahl von Fehlkorrespondenzen zu erzeugen, die dann zu 3D-Punkten mit fehlerhafter Raumlage führen. Insbesondere bei bewegten Objekten in einer Szene sind derartige Fehlkorrespondenzen sehr störend, da sie eine nachfolgende Bewegungsanalyse, Objektsegmentierung oder Klassifikation der 3D-Punktewolke stark erschweren oder unmöglich machen. Demgegenüber wird bei dem erfindungsgemäßen Verfahren außer der räumlichen Lage relevanter Bildbereiche auch deren Bewegung über die Zeit zur Korrespondenzbildung herangezogen. Auf diese Weise können nur ähnlich bewegte Teile des Objekts einander als Korrespondenzen zugeordnet werden, so dass die Anzahl der Fehlkorrespondenzen stark reduziert wird.

Bei einer bevorzugten Ausführungsform des Verfahrens ist vorgesehen, dass die relevanten Bildregionen eine zur Korrespondenzbildung ausreichende Variabilität der Bildwerte aufweisen. Die Bildwerte können insbesondere als Pixel-Grauwerte ausgebildet sein. Dies stellt sicher, dass keine Bildregionen mit homogenen Bildwertverteilungen zur Korrespondenzbildung herangezogen werden.

Vorzugsweise werden die relevanten Bildregionen mittels eines Interest-Operators ermittelt. Hierzu sind aus der digitalen Bildverarbeitung eine Vielzahl von Methoden bekannt, vorzugsweise werden als Interest-Operator Kantenfilter und/oder eine lokale statistische Grauwertanalyse eingesetzt.

Bei einer bevorzugten Ausführungsform werden raum-zeitliche Merkmale zur Ermittlung der relevanten Bildregionen angewendet. Die Erzeugung von raum-zeitlichen Merkmalen wird beispielsweise in C. Wöhler, J.K. Anlauf. Real-Time Object Recognition on Image Sequences with the Adaptable Time Delay Neural Network Algorithm - Applications for autonomous Vehicles in Image and Vision Computing, Vol. 19, No. 9-10, pp.593-618, 2001 beschrieben.

Hier werden raum-zeitliche Merkmale, die optimal zur Klassifikation eines Objekts in Bildersequenzen geeignet sind, durch ein Trainingsverfahren für die Gewichte der raum-zeitlichen rezeptiven Felder eines neuronalen Netzwerkes erzeugt. Raum-zeitliche Merkmale können auch explizit vorgegeben sein. Hierdurch lässt sich beispielsweise erreichen, dass nur in denjenigen Bildbereichen, in denen sich Ecken befinden, die sich von rechts oben nach links unten bewegen, eine Korrespondenzanalyse durchgeführt wird.

Bei einer bevorzugten Ausführungsform des Verfahrens werden aus den Bildregionen Bildbereiche in Form von Interest-Pixeln extrahiert. Eine derartige Extraktion erfolgt, indem auf die relevanten Bildregionen beispielsweise eine Non-Maximum-Suppression und/oder eine Skelettierungsoperation oder dergleichen angewendet wird.

Derartige Verfahren ermitteln auf Basis des Gradientenverlaufs eine oder mehrere Kanten bzw. Mittellinien in einer relevanten Bildregion. Die einzelnen Bildpunkte der Kanten bzw. Mittellinien werden als Interest-Pixel verwendet.

Es liegt eine besonders vorteilhafte Ausführungsform des Verfahrens vor, wenn das Ähnlichkeitsmaß ausschließlich zwischen Bildbereichen der mehreren Bildersequenzen gebildet wird, die derselben Epipolaren zugeordnet sind. Hierbei wird ausgenutzt, dass oftmals Kamerasysteme verwendet werden, deren Bilder im Rahmen der Epipolargeometrie beschreibbar sind. Insbesondere wird dabei das Korrespondenzproblem darauf reduziert, dass nur Bildbereiche ein und derselben Epipolaren zueinander zugeordnet werden müssen. In dem bevorzugten Fall, dass als Bildbereiche Interest-Pixel verwendet werden, werden Ähnlichkeitsmaße nur für Interest-Pixel gebildet, die auf der gleichen Epipolaren liegen.

Vorteilhafterweise erfolgt die Anpassung der parametrierten Funktion h(u,v,t) an jeweils ein Interest-Pixel und dessen lokale Umgebung insbesondere im Raum R(uvgt), so dass für jedes Interest-Pixel unter Berücksichtigung von dessen Umgebung eine parametrierte Funktion angepasst wird. Die lokale Umgebung umfasst bevorzugt einen Pixelbereich mit Pixeln, der an das jeweilige Interest-Pixel unmittelbar angrenzt. Dieser Pixelbereich ist vorzugsweise quadratisch ausgebildet, insbesondere mit einer ungeradzahligen Anzahl von Pixeln an der Begrenzungskante. Die lokale Umgebung umfasst alternativ oder ergänzend die zeitliche Umgebung in dem Raum R(uvgt), die sich über eine geeignet gewählte Anzahl von Bildern der Bildersequenz erstreckt. Die Anzahl an Bildern hängt dabei beispielsweise von der Art und der Geschwindigkeit von zu erkennenden Objekten ab.

Bei einer einfachen Ausführungsform ist die parametrierte Funktion h(u,v,t) als eine Hyperebene in dem Raum R(uvgt) ausgebildet, das heißt als eine (n-1) dimensionale ebene, als Unterraum des Raumes R(uvgt). Diese Ausbildung des Verfahrens erfordert einen geringen Rechenaufwand bei der Anpassung der parametrierten Funktion und minimiert somit den Gesamtrechenaufwand des Verfahrens.

Für diese Ausführungsform des Verfahrens wird als Ähnlichkeitsmaß beispielsweise der Winkel zwischen den Normalenvektoren der aus den Bildbereichen ermittelten Hyperebenen verwendet. Dieser Differenzwinkel ist ein Maß für einen ähnlichen Bildwert- bzw. Grauwertverlauf in den Bildbereichen der verschiedenen Bildersequenzen. Alternativ oder ergänzend werden für das Ähnlichkeitsmaß die Differenz der Achsenabschnittsparameter in der Intensitäts (g) - Dimension der Hyperebenen von Bildbereichen aus den mehreren Bildersequenzen herangezogen. Diese Differenz ist ein Maß für den absoluten mittleren Bildwert bzw. Grauwert in dem jeweiligen Bildbereich. Die Parameter der Funktion h können sodann beispielsweise bei der Bestimmung des optischen Flusses herangezogen werden.

In einer vorteilhaften Weise des Verfahrens ist die parametrierte Funktion h(u,v,t) als eine Funktion höherer Ordnung als eine Hyperebene und/oder als eine beliebige Funktion ausgebildet, wobei die parametrierte Funktion insbesondere eine beliebig geformte Fläche in dem Raum R(uvgt) bildet. Mit einer derart komplexen Funktion wird zwar der Rechenaufwand für die Anpassung erhöht, gleichzeitig wird jedoch die Genauigkeit der Anpassung verbessert, so dass eine zuverlässigere Zuordnung der Bildbereiche erfolgen kann.

Als Ähnlichkeitsmaß wird vorzugsweise das Differenzvolumen zwischen den aus den Bildbereichen ermittelten Flächen und/oder das in einem vorgegebenen Bereich von den Flächen umschlossene Volumen im R(uvgt)-Raum in der lokalen Umgebung des betrachteten Pixels verwendet.

Alternativ kann als Ähnlichkeitsmaß der direkte Vergleich der Parameter der aus den Bildbereichen bestimmten parametrierten Funktionen herangezogen werden. Vorzugsweise wird hierfür der Abstand im Raum der Parameter verwendet. Der Raum der Parameter ist dabei ein n-dimensionaler Raum, wobei n die Anzahl der unabhängigen Parameter der parametrierten Funktion h(u,v,t) angibt. Bevorzugt wird ein euklidischer Parameterraum verwendet.

Zur Minimierung des Rechenaufwands kann vorgesehen sein, dass zur Ermittlung der relevanten Bildregionen Differenzbilder gebildet werden, und zwar zwischen Bildern der Bildersequenzen und von zuvor aufgenommenen Referenzbildern der Szene. Es wird also anstatt des aktuellen Bildes jeweils die absolute Differenz zwischen dem aktuellen Bild und einem Referenzbild der Szene verwendet. Insbesondere wird diese Verfahrensvariante eingesetzt, wenn die Bildersequenzen mit stationären, also über die Zeit unbewegten Kameras aufgenommen werden. Ein mögliches Kriterium für den Interest-Operator ist hierbei ein Anstieg von 0 auf 1 oder ein Abfall von 1 auf 0 in einem mit einem festen Schwellenwert binarisierten Differenzbild. Auf diese Weise lässt sich die Anzahl der Fehlkorrespondenzen stark vermindern. Auch können zur Verringerung des Rechenaufwands Bild- oder Zeitpyramiden eingesetzt werden, wobei anstatt des aktuellen Bildes zunächst ein Bild mit niedriger Auflösung herangezogen wird, um beispielsweise schnelle Bewegungen erfassen zu können.

Die erfindungsgemäße Vorrichtung nach Anspruch 15 ist zur dreidimensionalen Szenenrekonstruktion geeignet und/oder dazu ausgebildet. Sie umfasst ein Kamerasystem und mindestens eine Auswerteeinheit, die mit dem Kamerasystem verschaltet ist. Erfindungsgemäß ist vorgesehen, dass eine erste Auswerteeinheit programmtechnisch und/oder schaltungstechnisch zur Durchführung des zuvor beschriebenen Verfahrens ausgebildet ist.

Vorzugsweise ist vorgesehen, dass das Kamerasystem als Stereokamerasystem realisiert ist, welches zwei Kameras umfasst. Insbesondere sind die zwei Kameras mit paralleler Beobachtungsrichtung angeordnet und/oder sind identisch ausgebildet. Diese Ausführungsform erlaubt eine sehr einfache Bestimmung der Epipolarlinie.

Alternativ ist das Kamerasystem als insbesondere kalibriertes Mehrkamerasystem ausgebildet, weist also zwei oder mehr Kameras auf. Insbesondere haben die Kameras einen überlappenden Beobachtungsbereich. Vorzugsweise ist das Kamerasystem kalibriert, alternativ kann auch eine automatische Kalibrierung vorgesehen sein.

Bei einer Weiterbildung der Vorrichtung ist eine zweite Auswerteeinheit vorgesehen, die für eine dreidimensionale Szenenrekonstruktion eine Korrespondenzbestimmung auf Basis eines anderen Algorithmus durchführt, insbesondere auf Basis einer Korrelationsanalyse. Optional ist für die zweite Auswerteeinheit ein weiteres Kamerasystem vorgesehen. Dieser Ausführungsform liegt die Überlegung zu Grunde, die gleiche Szene mit zwei voneinander unabhängigen Vorrichtungsbaugruppen zu beobachten und zu rekonstruieren, um eine erhöhte Erkennungssicherheit bei sicherheitsrelevanten Applikationen zu gewährleisten.

Weitere Einzelheiten, Merkmale, Merkmalskombinationen, Vorteile und Wirkungen auf der Basis der Erfindung ergeben sich aus der nachfolgenden Beschreibung bevorzugter Ausführungsbeispiele der Erfindung und aus den Zeichnungen.

Dabei zeigen:

Fig. 1 ein Ablaufdiagramm eines Ausführungsbeispiels des erfindungsgemäßen Verfahrens;

Fig. 2 ein Ausführungsbeispiel einer erfindungsgemäßen Vorrichtung in Blockdarstellung.

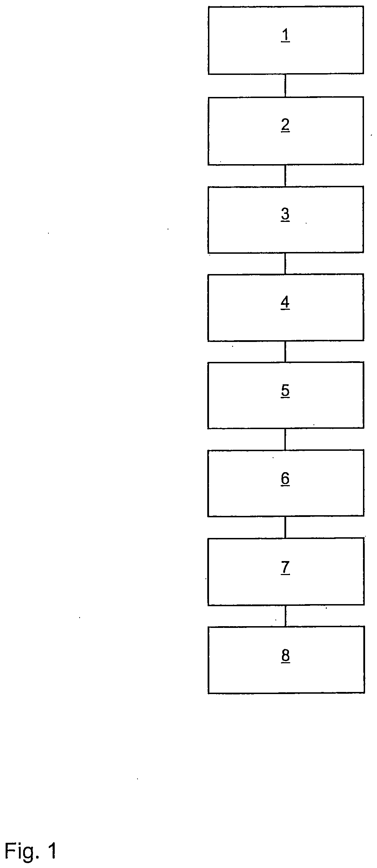

Figur 1 zeigt ein Ablaufdiagramm eines Ausführungsbeispiels des erfindungsgemäßen Verfahrens. In einem Schritt 1 werden von mindestens zwei Kameras Bildersequenzen aufgenommen, wobei die Bildersequenzen aus zeitlich äquidistanten Einzelbildern bestehen. Die Kameras sind zueinander synchronisiert, so dass zu den äquidistanten Zeitpunkten mit jeder Kamera zeitgleich ein Einzelbild aufgenommen wird. Auf diese Weise wird zu jedem zeitlich äquidistanten Zeitpunkt ein b-Tupel von Einzelbildern erzeugt, wobei b die Anzahl der mindestens zwei Kameras bezeichnet.

In einem optionalen Schritt 2 werden Differenzbilder erzeugt, indem von den Bildwerten, insbesondere von den Grauwerten, der Einzelbilder der Bildersequenzen jeweils Referenzbilder subtrahiert werden.

Soweit die mindestens zwei Kameras nicht derart zueinander angeordnet sind, dass die Epipolarbedingung erfüllt ist, werden in einem Schritt 3 die Einzelbilder des b-Tupels zueinander rektifiziert. Dies geschieht in bekannter Weise durch Anwendung von Rotations- und Translationsmatrizen. Nach dem Schritt 3 sind die Einzelbilder des B-Tupels so modifiziert, dass korrespondierende Bildbereiche einer gemeinsamen Epipolarlinie zugeordnet sind. Dieser Schritt 3 kann auch vor dem Schritt 2 oder zu einem späteren Zeitpunkt erfolgen.

In einem Schritt 4 werden relevante Bildregionen mittels eines Interest-Operators ermittelt. Hierzu werden die Differenzbilder binarisiert, wobei Pixel von Bildregionen mit Bildwerten unterhalb eines definierten Schwellenwertes den Wert 0 und Bildregionen oberhalb des Schwellenwertes den Wert 1 erhalten. Die Bildregionen mit Pixelwerten 1 werden im weiteren als relevante Bildregionen bezeichnet.

In einem Schritt 5 werden auf die relevanten Bildregionen der Differenzbilder (nicht der binarisierten Bilder) Bildbearbeitungsverfahren angewendet, die Pixel mit einer Umgebung mit besonders starken Gradienten extrahieren. Derartige Pixel sind für die Bestimmung von räumlichen Korrespondenzen besonders geeignet. Beispielsweise wird eine Skelettierungsoperation auf die relevanten Bildregionen angewandt, die skelettartige Mittellinien in den relevanten Bildregionen erzeugt. Die extrahierten Pixel, also bei diesem Beispiel die Pixel der Mittellinien, werden im weiteren Interest-Pixel genannt.

In einem Schritt 6 werden an jedes einzelne Interest-Pixel und dessen lokale Umgebung vorzugsweise auf Basis des Originalbilds und/oder des Differenzbilds eine parametrierte Funktion h(u,v,t) angepasst. Die Interest-Pixel werden dabei in einem vierdimensionalen Raum R(uvgt) dargestellt, der durch die Pixelposition u,v, den Bild- oder Grauwert g und die Zeit t aufgespannt wird. Die parametrierte Funktion h(u,v,t) ist im einfachsten Fall als Hyperebene ausgebildet. Diese parametrierte Funktion h(u,v,t) wird an ein Interest-Pixel und dessen Umgebung unter Verwendung von Informationen über die Bild- oder Grauwertverteilung und dessen zeitliches Verhalten angepasst. Die lokale Umgebung des Interest-Pixels umfasst die Umgebung bezüglich der Pixelposition u, v und die Umgebung bezüglich der Zeit t.

Die lokale Pixelumgebung und/oder die zeitliche Umgebung der aufgenommenen Einzelbilder wird vorzugsweise Applikationsspezifisch gewählt. Es besteht aber auch die Möglichkeit, die Pixelumgebung und/oder die zeitliche Umgebung Objektspezifisch anhand der Objektgröße zu wählen. Vorzugsweise findet bei unbewegtem Kamerasystem die Extraktion der Interest-Pixel in einem Differenzbild statt, das durch Bildung der Differenz aus dem aktuellen Bild der Szene und einem Referenzbild berechnet wird. Ohne Beschränkung der Allgemeinheit sei angenommen, dass das Kamerasystem aus zwei identischen Kameras mit parallelen optischen Achsen besteht, so dass die Epipolarlinien den Bildzeilen entsprechen.

In der Praxis finden sich viele Interest-Pixel an Grenzen von Objekten im Bild, die sich im Vergleich zum Referenzbild in die Szene hinein- oder aus ihr herausbewegt haben. Idealerweise kann insbesondere eine solche Objektgrenze durch einen abrupten Sprung der Pixelintensität beschrieben werden. In realen Bildern werden solche Intensitätssprünge allerdings meist nicht beobachtet, da sie durch die Point Spread Function des optischen Systems "aufgeweicht" werden. Aus diesem Grunde ist es vorteilhaft, den Intensitätsverlauf an der Objektgrenze durch eine sigmoide Funktion wie beispielsweise den Tangens Hyperbolicus zu beschreiben. Da allerdings angenommen werden muss, dass der sigmoide Intensitätsverlauf von weiteren Schwankungen der Pixelintensität überlagert ist, wird die Intensitätsverteilung in der raum-zeitlichen Umgebung eines Interest-Pixels vorzugsweise als gemischt polynomialsigmoider Ansatz modelliert:

$$h(u,v,t) = p_1(v,t)\tanh\left[p_2(v,t)u + p_3(v,t)\right] + p_4(u,v,t)\,. \qquad (1)$$

Die Terme $p_1(v,t)$, $p_2(v,t)$ und $p_3(v,t)$ beschreiben Polynome in v und t, während $p_4(u,v,t)$ ein Polynom in *u, v* und t ist. Für einen bestimmten Zeitschritt t modelliert Gl. (1) im Wesentlichen vertikal verlaufende Objektgrenzen, da aufgrund des Aperturproblems die Bestimmung von Disparitäten basierend auf horizontalen Kantenverläufen nicht möglich ist. Das Polynom $p_1(v,t)$ beschreibt die Amplitude und $p_2(v,t)$ die Steilheit der Sigmoidfunktion, die beide von der Bildzeile v abhängen, während $p_3(v,t)$ die zeilenabhängige Position der modellierten Objektgrenze wiedergibt. Der Wert von $p_2(v,t)$ hängt im Wesentlichen davon ab, wie scharf die Kante durch das optische System abgebildet wird, wobei große Werte eine scharfe und kleine Werte eine unscharfe Kante beschreiben. Das Polynom $p_4(u,v,t)$ ist ein räumlich variabler Offset-Term, der lokale Intensitätsschwankungen innerhalb und außerhalb des Objekts modelliert und so beispielsweise unruhigen Hintergrund berücksichtigen kann. Alle beschriebenen Eigenschaften werden im Rahmen des Spacetime-Stereo-Ansatzes als zeitlich veränderlich angesehen, was sich in der direkten Zeitabhängigkeit der Polynome widerspiegelt. Interest-Pixel, für die das Residuum des Fits der Funktion $h(u,v,t)$ an die Pixelintensitäten $g(u,v,t)$ größer als ein vorgegebener Schwellwert ist, werden zurückgewiesen.

In ihrer allgemeinen Form führt Gl. (1) auf eine Bestimmung der Parameter der Funktion $h(u,v,t)$ für jedes Interest-Pixel durch ein nichtlineares Optimierungsverfahren. Solche Optimierungsverfahren benötigen oftmals Vorwissen über die Lösung, es ist nicht garantiert, dass wirklich das globale Optimum gefunden wird, und erfordern im allgemeinen lange Rechenzeiten. Insbesondere das letztgenannte Problem erschwert den Einsatz des auf nichtlinearer Optimierung basierenden Verfahrens in realzeitfähigen Systemen oder macht ihn dort unmöglich.

Aus diesem Grunde ist es besonders vorteilhaft, wenn zur Bestimmung der Parameter der Funktion $h(u,v,t)$ für jedes Interest-Pixel ein auf physikalisch motivierten vereinfachenden Annahmen beruhender spezieller Rechenweg genutzt wird, der auf eine Bestimmung der Funktionsparameter durch lineare Optimierung führt. Ein solches Optimierungsproblem sei nachfolgend im Detail beschrieben und ist unter Einsatz von aus der Literatur bekannten Verfahren sehr recheneffizient lösbar (beispielsweise mittels: W. H. Press, S. A. Teukolsky, W. T. Vetterling, B. P. Flannery. Numerical Recipes in C. Cambridge University Press, Cambridge, UK, 1992).

Dem vorteilhaften Verfahren liegen folgende Annahmen zu Grunde:

1. Der Offset $p_4(u,v,t)$ ist räumlich konstant und entspricht der über die räumlichen Bildkoordinaten u und v gemittelten Pixelintensität $\overline{I}_{uv}(t)$ der lokalen Umgebung des Interest-Pixels.

2. Die Amplitude $p_1(v,t)$ des Sigmoids ist räumlich konstant und proportional zur Standardabweichung $\sigma_I(t)$ der Pixelintensitäten in der räumlichen lokalen Umgebung des Interest-Pixels mit $p_1(v,t) = k\sigma_I(t)$, wobei k einen konstanten, vom Benutzer vorgegebenen Faktor darstellt. Der Wert von k liegt vorzugsweise zwischen 0.8 und 3. Es ist hierbei auch möglich, anstatt räumlicher Mittelwerte und Standardabweichungen raum-zeitliche Mittelwerte und Standardabweichungen zu verwenden.

Unter diesen Annahmen läßt sich Gl. (1) umformen zu

$$p_2(v,t)u + p_3(v,t) = \operatorname{artanh}\left[\frac{I(u,v,t) - \overline{I}_{uv}(t)}{k\sigma_I(t)}\right] \equiv \widetilde{I}(u,v,t)\,. \qquad (2)$$

Die linke Seite von Gl. (2) ist ein Polynom in v und t, dessen Parameter sich aus den transformierten Bilddaten $\tilde{I}(u,v,t)$ durch Lösen eines linearen Gleichungssystems bestimmen lassen, wofür effiziente Lösungsverfahren zur Verfügung stehen.

Beispielhaft sei hier das Gaußsche Eliminationsverfahren genannt. Pixel mit

$$\left|\left[I(u,v,t)-\bar{I}_{uv}(t)\right]/\left(k\sigma_I(t)\right)\right| \geq \Theta$$

mit Θ als vom Benutzer vorzugebendem Systemparameter werden nicht in den Optimierungsvorgang einbezogen, weil für sie ein transformierter Pixelwert $\tilde{I}(u,v,t)$ durch Inversion der Sigmoidfunktion nicht oder aufgrund der großen Steigung der artanh-Funktion nur sehr ungenau bestimmt werden kann. Der Wert von Θ ist vorzugsweise größer als 0.75 und muss stets kleiner als 1 sein. Die Polynomparameter der linken Seite von Gl. (2) ermöglichen innerhalb des mit dem erfindungsgemäßen Verfahrens grundlegend beschriebenen Ansätzen die Bestimmung von Korrespondenzen zwischen Stereobildpaaren bzw. Paaren von Stereobildsequenzen.

Eine weitere vorteilhafte Ausgestaltung des Verfahrens ergibt sich, wenn weitere vereinfachende Annahmen gemacht werden:

3. Die Steilheit $p_2(v,t)$ des Sigmoids ist konstant mit $p_2(v,t) = a$.

4. Die Objektgrenze kann durch ein Geradenstück der Steigung b dargestellt werden, das sich mit der konstanten Geschwindigkeit c bewegt; dies entspricht

$$p_3(v,t) = bv + ct + d\,.$$

Diese Annahmen führen direkt auf einen linearen Ansatz für die vier Modellparameter *a, b, c* und *d*:

$$au + bv + ct + d = \tilde{I}(u,v,t) \qquad (3)$$

In diesem Modell wird das Bewegungsverhalten der Kante durch den Geschwindigkeitsparameter c beschrieben. Die Modellparameter *a, b,* c und *d* ermöglichen im Rahmen des erfindungsgemäßen Verfahrens die Bestimmung von Korrespondenzen zwischen Stereobildpaaren bzw. Paaren von Stereobildsequenzen.

Gl. (1) erlaubt eine direkte subpixelgenaue Bestimmung der Kantenposition $u_e$ aus den gefitteten Modellparametern. Dieser Wert ist von großer Bedeutung für die nach der Korrespondenzbestimmung stattfindende Berechnung der Disparität. Es ist hier sinnvoll, den Wert von $u_e$ als den Ort des maximalen Gradienten des Intensitätsprofils in horizontaler Richtung zu definieren, was der Nullstelle der Sigmoidfunktion entspricht. Diese Bedingung führt auf

$$u_e(u_c,v_c,t_c) = -p_3(v_c,t_c)/\,p_2(v_c,t_c)\,, \qquad (3)$$

wobei sich $u_c$, $v_c$ und $t_c$ auf das Zentrum der betrachteten lokalen Umgebung des Interest-Pixels beziehen. Der Wert von $v_c$ bezeichnet darüber hinaus die Epipolarlinie, auf der das betreffende Interest-Pixel liegt.

In einem Schritt 7 werden die Parameter der parametrierten Funktion h(u,v,t) von Interest-Pixeln, die verschiedenen Einzelbildern des b-Tupels zugeordnet sind und die auf einer gemeinsamen Epipolarlinie liegen, miteinander verglichen. Der Vergleich erfolgt beispielsweise, indem die kleinste Differenz der Parameter als Ähnlichkeitsmaß verwendet wird.

In einem Schritt 8 werden die Interest-Pixel der verschiedenen Einzelbildern des b-Tupels mit dem besten Ähnlichkeitsmaß als zueinander korrespondierend bestimmt. Auf Basis dieser korrespondierenden Interest-Pixel erfolgt anschließend in bekannter Weise eine dreidimensionale Rekonstruktion der beobachteten Szene.

Bei einer stark vereinfachten Ausführungsform des Verfahrens, welches nicht unter den Anspruchswortlaut des Anspruchs 1 fällt, werden statt Bildersequenzen nur Einzelbilder, insbesondere Paare bzw. Tupel von Einzelbildern, verwendet, bei denen die Bildung von Korrespondenzen durch Vergleich der Parameter von im Raum R(u,v,g) angepassten Funktionen I(u,v). Auch diese vereinfachte Ausführungsform lässt sich mit dem Differenzbild-Ansatz kombinieren. Bei der vorliegenden Erfindung wird dagegen die parametrierte Funktion h(u,v,t) mindestens über den Zeitraum von zwei aufeinanderfolgenden Einzelbildern der Bildersequenzen angepasst.

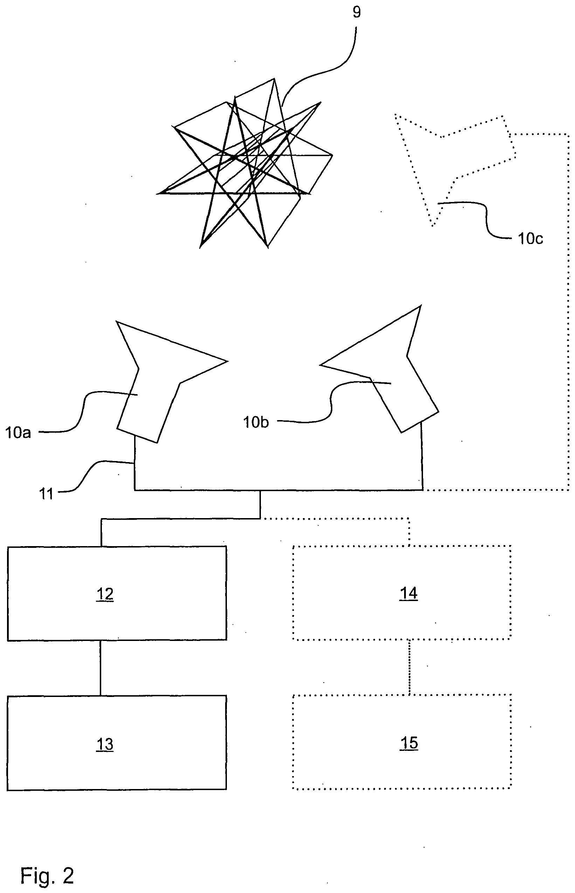

Die Figur 2 zeigt eine Vorrichtung zur dreidimensionalen Szenenrekonstruktion. Ein Objekt 9 wird mittels eines Kamerasystems optisch erfasst, welches aus unbewegten Kameras 10 a, b und optional 10c besteht. Bei dem Objekt 9 kann es sich beispielsweise um eine Fremdperson in einer Bearbeitungszelle handeln, die mit der Vorrichtung zur dreidimensionalen Szenenrekonstruktion als Roboter-Schutzraumüberwachung ausgestattet ist. Die Kameras sind als digitale Kameras, insbesondere als CCD-Kameras ausgebildet, mit denen Bilder in Grauwertformat aufgenommen werden können. Bei anderen Applikationen können auch Farbkameras oder Wärmebildkameras oder UV-Kameras eingesetzt werden. Die Kameras 10 a,b,c sind zueinander synchronisiert, so dass zeitgleich ein Dreiertupel mit drei Einzelbildern aufgenommen wird.

Die Kamerasignale werden über ein Kabel 11 an eine erste Auswerteeinheit 12 übergeben. In dieser Auswerteeinheit 12 wird das in Zusammenhang mit der Figur 1 erläuterte Verfahren zur Bestimmung von räumlichen Korrespondenzen durchgeführt. Hierzu ist beispielsweise in einer Recheneinheit ein entsprechendes Programm gespeichert. Die bestimmten Korrespondenzen zwischen den Bildbereichen der Bildersequenzen der Kameras 10 a, b, c werden an eine Berechnurigseinheit 13 übergeben, die das erfasste Objekt 9 dreidimensional rekonstruiert.

Optional und in Figur 2 gestrichelt angedeutet ist eine zweite Auswerteeinheit 14 vorgesehen, die ebenfalls Korrespondenzen zwischen Bildbereichen der Bildersequenzen bestimmt, jedoch auf Basis eines abweichend ausgebildeten Algorithmus. Die Auswerteeinheit 14 arbeitet beispielsweise mit einer Korrelationsanalyse. Die derart bestimmten Korrespondenzen werden an eine zweite Berechnungseinheit 15 übergeben, die ebenfalls das erfasste Objekt 9 dreidimensional rekonstruiert. Die Ergebnisse der ersten Berechnungseinheit 13 und der zweiten Berechnungseinheit 15 können miteinander verglichen werden, um eine höhere Rekonstruktionsgenauigkeit zu erhalten oder unabhängig voneinander ausgewertet werden, um bei sicherheitsrelevanten Anwendungen eine höhere Sicherheit zu erreichen.

**Patentansprüche**

**1.** Verfahren zur Bestimmung von räumlichen Korrespondenzen zwischen Bildbereichen in mehreren, aus unterschiedlichen Beobachtungsperspektiven aufgenommenen Bildersequenzen einer Szene, vorzugsweise zur dreidimensionalen Rekonstruktion dieser Szene, wobei in den Bildersequenzen für die Korrespondenzbestimmung relevante Bildregionen ermittelt werden, aus denen Bildbereiche gebildet werden, wobei an die Bildwerte in den Bildbereichen in einem jeweils durch die Pixelposition u,v, den Bildwert g und die Zeit t aufgespannten Raum R(uvgt) eine parametrierte Funktion h(u,v,t) angepasst wird und wobei die Parameter der parametrierten Funktionen zur Bildung eines Ähnlichkeitsmaßes zwischen den Bildbereichen der mehreren Bildersequenzen verwendet werden.

**2.** Verfahren nach Anspruch 1, wobei die relevanten Bildregionen eine zur Korrespondenzbildung ausreichende Variabilität der Bildwerte, insbesondere der Pixel-Grauwerte, aufweisen.

**3.** Verfahren nach Anspruch 1 oder 2, wobei die relevanten Bildregionen mittels eines Interest-Operators ermittelt werden, der vorzugsweise als Kantenfilter und/oder eine lokale statistische Grauwertanalyse ausgebildet ist.

**4.** Verfahren nach einem der vorhergehenden Ansprüche, wobei die relevanten Bildregionen mittels Auswertung von raum-zeitlichen Merkmalen erfolgt.

**5.** Verfahren nach einem der vorhergehenden Ansprüche, wobei Bildbereiche in Form von Interest-Pixeln gebildet werden, vorzugsweise indem auf die relevanten Bildregionen eine Non-Maximum-Suppression und/oder eine Skelettierungs-Operation angewandt wird.

**6.** Verfahren nach einem der vorhergehenden Ansprüche, wobei das Ähnlichkeitsmaß zwischen Bildbereichen der mehreren Bildsequenzen gebildet wird, die derselben Epipolaren zugeordnet sind, insbesondere zwischen Interest-Pixel gebildet wird, die auf derselben Epipolaren und/oder Epiloarlinie liegen.

**7.** Verfahren nach Anspruch 5 oder 6, wobei die Anpassung der parametrierten Funktion h(u,v,t) an die Interest-Pixel und deren lokale Umgebung erfolgt.

**8.** Verfahren nach Anspruch 7, wobei die lokale Umgebung als Pixelbereich ausgebildet ist, der vorzugsweise als quadratischer Pixelbereich mit insbesondere ungeradzahliger Pixelkantenzahl ausgebildet ist, und/oder als zeitliche Umgebung ausgebildet ist.

**9.** Verfahren nach einem der vorhergehenden Ansprüche, wobei die parametrierte Funktion als eine Hyperebene in dem Raum R(uvgt) ausgebildet ist.

**10.** Verfahren nach Anspruch 9, wobei für das Ähnlichkeitsmaß der Winkel zwischen den Normalenvektoren und/oder die Differenz der Achsenabschnittsparameter der aus den Bildbereichen ermittelten Hyperebenen verwendet wird.

**11.** Verfahren nach einem der Ansprüche 1 bis 8, wobei die parametrierte Funktion h(u,v,t) als eine Funktion höherer Ordnung als eine Hyperebene ausgebildet ist und insbesondere eine beliebig geformte Fläche in dem Raum R(uvgt) bildet.

**12.** Verfahren nach Anspruch 11, wobei für das Ähnlichkeitsmaß das Differenzvolumen zwischen den aus den Bildbereichen ermittelten Flächen verwendet wird.

**13.** Verfahren nach einem der vorhergehenden Ansprüche, wobei für das Ähnlichkeitsmaß der direkte Vergleich der aus den Bildbereichen bestimmten Parameter verwendet wird, wobei vorzugsweise der Abstand, insbesondere der euklidische Abstand, im Raum der Parameter verwendet wird.

**14.** Verfahren nach einem der vorhergehenden Ansprüche, **dadurch gekennzeichnet, dass** die relevanten Bildregionen ermittelt werden, wobei Differenzbilder zwischen den Bildern der Bildersequenzen und von Referenzbildern erzeugt werden.

**15.** Verfahren nach einem der vorhergehenden Ansprüche, **dadurch gekennzeichnet, dass** zur Bestimmung der Parameter der Funktion *h(u,v,t)* für jedes Interest-Pixel ein auf physikalisch motivierten vereinfachenden Annahmen beruhender spezieller Rechenweg genutzt wird, der auf eine Bestimmung der Funktionsparameter durch lineare Optimierung führt.

**16.** Vorrichtung zur dreidimensionalen Szenenrekonstruktion mit einem Kamerasystem (10a,b,c) und mindestens einer Auswertungseinheit (12, 14), **dadurch gekennzeichnet, dass** eine erste Auswerteeinheit (12) programmtechnisch und/ oder schaltungstechnisch zur Durchführung des Verfahrens nach einem der Ansprüche 1 bis 14 ausgebildet ist.

**17.** Vorrichtung nach Anspruch 15, **dadurch gekennzeichnet, dass** das Kamerasystem als Stereokamerasystem (10a,b) ausgebildet ist.

**18.** Vorrichtung nach Anspruch 15, **dadurch gekennzeichnet, dass** das Kamerasystem als kalibriertes Mehrkamerasystem (10a,b,c) ausgebildet ist.

**19.** Vorrichtung nach einem der Ansprüche 15 bis 17, **gekennzeichnet durch** eine zweite Auswerteeinheit (14), die programmtechnisch und/oder schaltungstechnisch zur Bestimmung von Korrespondenzen für eine dreidimensionale Szenenrekonstruktion ausgebildet ist.

**20.** Vorrichtung nach Anspruch 18, **dadurch gekennzeichnet, dass** der zweiten Auswerteeinheit (14) ein weiteres Kamerasystem zugeordnet ist.

**21.** Vorrichtung nach Anspruch 18 oder 19, **dadurch gekennzeichnet, dass** erste und zweite Auswerteeinheit (12, 14) unabhängig voneinander betreibbar sind und/oder dass das Kamerasystem und weiteres Kamerasystem unabhängig voneinander betreibbar sind.

## Claims

**1.** A method for determining spatial correspondences between image areas in a number of image sequences of a scene that are recorded from different observation perspectives, in particular for the three-dimensional reconstruction of this scene, wherein image regions that are relevant for determining correspondence are determined within the image sequences, wherein image areas are formed from the relevant image regions, wherein a parameterized function h(u,v,t) is matched to the image values in the image areas in a space R(uvgt) respectively defined by pixel position u, v, image value g and time t, and wherein the parameters of the parameterized functions are used to form a similarity measure between the image areas of the number of image sequences.

**2.** The method of claim 1, wherein the relevant image regions have a variability in the image values, in particular the pixel gray values, sufficient for forming correspondence.

**3.** The method of claim 1 or 2, wherein the relevant image regions are determined by means of an interest operator which is preferably designed as an edge filter and/or a local statistical gray value analysis.

**4.** The method of one of the preceding claims, wherein the relevant image regions are determined by means of evaluating spatial temporal features.

**5.** The method of one of the preceding claims, wherein image areas are formed as interest pixels, preferably by applying a non-maximum suppression and/or a skeletonizing operation to the relevant image regions.

**6.** The method of one of the preceding claims, wherein the similarity measure is formed between image areas of the number of image sequences that are assigned to the same epipolars, in particular is formed between interest pixels that lie on the same epipolars and/or epipolar line.

**7.** The method of claim 5 or 6, wherein the parameterized function h(u,v,t) is matched to the interest pixels and the local environment thereof.

**8.** The method of claim 7, wherein the local environment is configured as a pixel area that is preferably designed as a square pixel area with, in particular, an odd number of pixel edges, and/or is designed as a temporal environment.

**9.** The method of one of the preceding claims, wherein the parameterized function is configured as a hyperplane in the space R(uvgt).

**10.** The method of claim 9, wherein an angle between normal vectors and/or a difference of axis section parameters of the hyperplanes determined from the image areas is used for the similarity measure.

**11.** The method of one of claims 1 to 8, wherein the parameterized function h(u,v,t) is designed as a function of higher order than a hyperplane and, in particular, forms an arbitrarily shaped surface in the space R(uvgt).

**12.** The method of claim 11, wherein a differential volume between surfaces determined from the image areas is used for the similarity measure.

**13.** The method of one of the preceding claims, wherein a direct comparison of the parameters determined from the image areas is used for the similarity measure, wherein the distance in the parameter space is preferably used, in particular the Euclidian distance.

**14.** The method of one of the preceding claims, **characterized in that** the relevant image regions are determined, wherein difference images between the images of the image sequences and of reference images are generated.

**15.** The method of one of the preceding claims, **characterized in that**, in order to determine the parameters of the function h(u,v,t) for each interest pixel, a special computation path that is based on physically motivated simplifying assumptions is used and leads to a determination of the function parameters by linear optimization.

**16.** A device for three-dimensional scene reconstruction having a camera system (10a,b,c) and at least one evaluation unit (12, 14), **characterized in that** a first evaluation unit (12) is designed by programming and/or circuitry to carry out the method of one of claims 1 to 14.

**17.** The device of claim 15, **characterized in that** the camera system is designed as a stereo camera system (10a,b).

**18.** The device of claim 15, **characterized in that** the camera system is designed as a calibrated multi-camera system (10a,b,c).

**19.** The device of one of claims 15 to 17, **characterized by** a second evaluation unit (14), which is designed by programming and/or circuitry to determine correspondences for a three-dimensional scene reconstruction.

**20.** The device of claim 18, **characterized in that** the second evaluation unit (14) is assigned a further camera system.

**21.** The device of claim 18 or 19, **characterized in that** the first and second evaluation units (12, 14) are capable of being operated independently of one another, and/or in that the camera system and the further camera system are capable of being independently of one another.

## Revendications

1. Procédé de détermination de correspondances spatiales entre des zones d'images dans plusieurs séquences d'images acquises à partir de perspectives d'observation différentes d'une scène, de préférence pour la reconstruction tridimensionnelle de ladite scène, dans lequel des régions d'images pertinentes sont déterminées dans les séquences d'images destinées à la détermination de correspondance, à partir desquelles des zones d'images sont formées, dans lequel une fonction paramétrée h(u,v,t) est adaptée aux valeurs d'image dans les zones d'images se trouvant dans un espace R(uvgt) respectivement sous-tendu par la position de pixel u,v, la valeur d'image g et le temps t et dans lequel les paramètres des fonctions paramétrées sont utilisés pour établir une mesure de similitude entre les zones d'images des multiples séquences d'images.

2. Procédé selon la revendication 1, dans lequel les régions d'images pertinentes présentent une variabilité des valeurs d'image, notamment des niveaux de gris des pixels, qui est suffisante pour le calcul de correspondance.

3. Procédé selon la revendication 1 ou 2, dans lequel les régions d'images pertinentes sont déterminées au moyen d'un opérateur d'intérêt qui est de préférence réalisé sous la forme d'un filtre sélectif et/ou d'une analyse statistique locale de niveaux de gris.

4. Procédé selon l'une quelconque des revendications précédentes, dans lequel les régions d'images pertinentes sont obtenues par évaluation d'éléments caractéristiques spatio-temporels.

5. Procédé selon l'une quelconque des revendications précédentes, dans lequel des zones d'images sont établies sous la forme de pixels d'intérêt, de préférence en appliquant une suppression de valeurs non maximales et/ou qu'une opération de création de squelette aux régions d'images pertinentes.

6. Procédé selon l'une quelconque des revendications précédentes, dans lequel la mesure de similitude est établie entre des zones d'images des multiples séquences d'images, qui sont associées aux mêmes épipolaires, est notamment établie entre des pixels d'intérêt qui se situent sur les mêmes épipolaires et/ou courbes épipolaires.

7. Procédé selon la revendication 5 ou 6, dans lequel l'adaptation de la fonction paramétrée h(u,v,t) s'effectue sur les pixels d'intérêt et leur environnement local.

8. Procédé selon la revendication 7, dans lequel l'environnement local est réalisé sous la forme d'une zone de pixel qui est de préférence réalisée sous la forme d'une zone de pixel carrée ayant notamment un nombre impair d'arêtes de pixels, et/ou est réalisé sous la forme d'un environnement temporel.

9. Procédé selon l'une quelconque des revendications précédentes, dans lequel la fonction paramétrée est réalisée sous la forme d'un hyperplan dans l'espace R(uvgt).

10. Procédé selon la revendication 9, dans lequel l'angle entre les vecteurs normaux et/ou la différence entre les paramètres de la section axiale des hyperplans déterminés à partir des zones d'images est utilisé pour la mesure de similitude.

11. Procédé selon l'une quelconque des revendications 1 à 8, dans lequel la fonction paramétrée h(u,v,t) est réalisée sous la forme d'une fonction d'ordre supérieur en tant qu'hyperplan et forme notamment une surface de forme quelconque dans l'espace R(uvgt).

12. Procédé selon la revendication 11, dans lequel le volume différentiel entre les surfaces déterminées à partir des zones d'images est utilisé pour la mesure de similitude.

13. Procédé selon l'une quelconque des revendications précédentes, dans lequel une comparaison directe des paramètres déterminés à partir des zones d'images est utilisée pour la mesure de similitude, dans lequel la distance, notamment la distance euclidienne, est de préférence utilisée dans l'espace des paramètres.

14. Procédé selon l'une quelconque des revendications précédentes, **caractérisé en ce que** les régions d'images pertinentes sont déterminées, dans lequel des images de différence entre les images des séquences d'images et des images de référence sont générées.

15. Procédé selon l'une quelconque des revendications précédentes, **caractérisé en ce qu'**on utilise pour déterminer les paramètres de la fonction h(u,v,t) destinée à chaque pixel d'intérêt un mode de calcul spécial reposant sur des hypothèses simplificatrices motivées physiquement qui conduit à une détermination des paramètres de la fonction par optimisation linéaire.

16. Dispositif de reconstruction tridimensionnelle de scènes comportant un système de caméra (10a,b,c) et au moins une unité d'évaluation (12, 14), **caractérisé en ce qu'**une première unité d'évaluation (12) utilise une technique de programmation et/ou une technique à base de circuits pour mettre en oeuvre le procédé selon l'une quelconque des revendications 1 à 14.

17. Dispositif selon la revendication 15, **caractérisé en ce que** le système de caméra est réalisé sous la forme d'un système de caméra stéréoscopique (10a,b).

18. Dispositif selon la revendication 15, **caractérisé en ce que** le système de caméra est réalisé sous la forme d'un système à caméras multiples étalonné (10a,b,c).

19. Dispositif selon l'une quelconque des revendications 15 à 17, **caractérisé par** une deuxième unité d'évaluation (14) qui utilise une technique de programmation et/ou une technique à base de circuits pour déterminer des correspondances pour la reconstruction tridimensionnelle de scènes.

20. Dispositif selon la revendication 18, **caractérisé en ce qu'**un autre système de caméra est associé à la deuxième unité d'évaluation (14).

21. Dispositif selon la revendication 18 ou 19, **caractérisé en ce que** les première et deuxième unités d'évaluation (12, 14) peuvent être mises en fonctionnement indépendamment l'une de l'autre et/ou **en ce que** le système de caméra et l'autre système de caméra peuvent être mis en fonctionnement indépendamment l'un de l'autre.

1
2
3
4
5
6
7
8

Fig. 1

9
10c
10a
10b
11
12
14
13
15

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **J. DAVIS ; D. NEHAB ; R. RAMAMOORTHI ; S. RUSINKIEWICZ ; SPACE-TIME STEREO.** A unifying framework for Depth from Triangulation. *IEEE Trans. Pattern Analysis and Machine Intelligence,* 2005, vol. 27 (2
- **C. WÖHLER ; L. KRÜGER.** A Contour based Stereo Vision Algorithm für Video Surveillance Applications. *SPIE Visual Communication and Image Processing,* 2003
- **LI ZHANG et al.** Spacetime Stereo: shape recovery for dynamic scenes. *Proceedings 2003 IEEE Computer Society Conference on Computer Vision and Pattern Recognition IEEE Comput. Soc Los Alamitos,* 2003, vol. 2, II-367
- **J. DAVIS et al.** Spacetime Stereo: A Unifying Framework for Depth from Triangulation. *IEEE TRANSACTIONS ON PATTERN ANALYSIS AND MACHINE INTELLIGENCE,* Februar 2005, vol. 27 (2
- Periodic Motion Detection and Segmentation via Approximate Sequence Alignment. **LAPTEV et al.** Computer Vision, 2005. ICCV 2005. Tenth IEEE International Conference on Beijing. IEEE, 17. Oktober 2005, vol. 1, 816-823
- Structure from Stereo - a Review. **DHONG et al.** IEEE Transactions on Systems, Man and Cybernetics. IEEE Inc, 01. November 1989, vol. 19, 1489-1510
- Stereo Vision and Navigation within Buildings. **TRIENDL et al.** Proceedings of the International Conference on Robotics and Automation. Raleigh. IEEE Comp. Soc. Press, 30. Marz 1987, vol. 3, 1725-1730
- Space-time interest points. **LAPTEV et al.** Proceedings of the Eight IEEE International Conference on Computer Vision. (ICCV). IEEE Comp. Soc, 13. Oktober 2003, 432-439
- **C. WÖHLER ; J.K. ANLAUF.** *Real-Time Object Recognition on Image Sequences with the Adaptable Time Delay Neural Network Algorithm - Applications for autonomous Vehicles in Image and Vision Computing,* 2001, vol. 19 (9-10), 593-618
- **W. H. PRESS ; S. A. TEUKOLSKY ; W. T. VETTERLING ; B. P. FLANNERY.** *Numerical Recipes in C. Cambridge University Press,* 1992